# EUROPEAN PATENT APPLICATION

(11) **EP 3 366 127 A1**
(43) Date of publication of application: **29.08.2018**
(21) Application number: 17157996.4
(22) Date of filing: 24.02.2017
(51) Int. Cl.: A01K 85/16

(54) **FISHING LURE**

(71) Applicant: Pure Fishing, Inc., Columbia, SC 29203 (US)
(72) Inventor: SVENSSON, Patrik, 37451 Asarum (SE)
(74) Representative: Bell, James

(57) **Abstract**

A fishing lure, including a body (1), positioning means (15) operatively mounted to a first portion of the body, locking means (35) configured to engage a portion of positioning means to prevent rotation of the positioning means, guide means (10) affixed to a portion of the positioning means and extending beyond the first portion of the body, so as to enable angular movement of the guide means relative to the body, and resiliently biased actuating means (5) configured to transmit a force to the locking means to cause temporary disengagement of the locking means from the positioning means, wherein the positioning means is permitted to rotate about an axis transverse to a longitudinal axis of the body when the locking means is disengaged.

## Description

### Field of the Disclosure

The present disclosure is related to fishing lures. More particularly, the present disclosure is related to an adjustable fishing lure with improved adjustment capabilities.

### Background of the Disclosure

When fishing, a fisherman may elect to use various bait for purposes of attracting a desired fish. For example, such bait may be live bait (e.g., worms, shrimp, etc.), man-made bait (e.g., rubber worms, lures, etc.), and combinations thereof.

When using man-made bait, and particularly, lures, various types of lures are available. For example, spinners, spoons, poppers, decoys and wobblers, among others. Depending on a fish to be caught, it may be desired to cause these lures to be positioned at a particular depth during operation, and such depth control may be accomplished in a variety of ways. For example, weights may be implemented to ballast the lure. US 5,992,084 discloses a fishing lure including a lure body with a longitudinal hollow extending along the longitudinal axis of the lure body which defines an inwardly facing circumferential wall of the lure body, a weight mounted within the longitudinal hollow in such a manner as to move back and forth along a substantially center line of the longitudinal hollow, and a weight holding member disposed on the inwardly facing circumferential wall of the lure body closer to a forward end of the lure body in such a manner as to hold the weight via magnetic force acting between the weight and the weight holding member.

In another example, one or more guide fins may be implemented to direct the lure deeper or shallower in the water while the lure is reeled in. US 2,776,517 discloses a lure having a guide fin for controlling the submersion depth of the lure.

### SUMMARY OF THE INVENTION

The inventor of the invention of the present disclosure have come to recognize that improvements could be made in the previous designs. Particularly, when implementing a guide fin, such as in US 2,776,517, the guide fin may be moved inadvertently, such as, for example, when hitting the water after being cast, or when bumping an obstruction (e.g., a rock, wood, etc.) while being reeled in.

Therefore, the inventor has developed an improved fishing lure, the fishing lure including a body, positioning means operatively mounted to a first portion of the body, locking means configured to engage a portion of positioning means to prevent rotation of the positioning means, guide means engaged with a portion of the positioning means and extending beyond the first portion of the body, so as to enable angular movement of the guide means relative to the body, and resiliently biased actuating means configured to transmit an applied force to the locking means to cause temporary disengagement of the locking means from the positioning means. The positioning means is permitted to rotate about an axis transverse to a longitudinal axis of the body when the locking means is disengaged.

By providing such a lure, even during a rough landing from a cast or when hitting an obstruction during reeling, the guide means of the lure remains locked in place, and the lure will continue at a desired depth. Further, because the actuating means is easily accessible at an end of the lure, adjustment of the guide means to a desired position is facilitated.

The locking means may include a resiliently biased pin, preferably cylindrical in shape, configured to engage one or more teeth of the positioning means.

The fishing lure may include a resilient member biasing the pin and optionally the actuating means.

The actuating means may be configured to slide parallel to a longitudinal axis of the body.

The fishing lure may include a guide pin about which the positioning means is configured to rotate.

The actuating means may include a slot configured to engage with the guide pin.

The guide pin may pass through at least a portion of the body, the positioning means, and the actuating means.

The positioning means may include at least 3 teeth, better at least 4 teeth, preferably 5 teeth.

The locking means may be affixed to, or formed unitarily with the actuating means.

The body may include a recess configured to house a resilient member, and to receive at least a portion of the actuating means.

According to other embodiments, a fishing lure is provided, including a body, a positioning plate operatively mounted to a first portion of the body, a pawl configured to engage a portion of the positioning plate to prevent rotation of the positioning plate, a guide plate engaged with a portion of the positioning plate and extending beyond the first portion of the body, so as to enable angular movement of the guide plate relative to the body, and a resiliently biased actuator configured to transmit a force to the pawl to cause temporary disengagement of the pawl from the positioning plate. The positioning plate is permitted to rotate about an axis transverse to a longitudinal axis of the body when the pawl is disengaged.

The pawl may include a resiliently biased pin configured to engage one or more teeth of the positioning plate.

The fishing lure may include a resilient member biasing the pin and the actuator.

The actuator may be configured to slide parallel to a longitudinal axis of the body.

The fishing lure may include a guide pin about which the positioning plate is configured to rotate.

The actuator may include a slot configured to engage with the guide pin.

The guide pin may pass through at least a portion of the body, the positioning plate, and the actuator.

The positioning plate may comprise at least 3 teeth and less than 8 teeth.

The pawl may be affixed to, or formed unitarily with the actuator.

The body may include a recess configured to house a resilient member, and to receive at least a portion of the actuator.

The features described above are intended to be combinable unless otherwise clearly contradictory.

Additional objects and advantages of the invention will be set forth in part in the description which follows, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

The accompanying drawings, which are incorporated in and constitute a part of this specification, illustrate embodiments of the invention and together with the description, serve to explain the principles of the disclosure.

### BRIEF DESCRIPTION OF THE DRAWINGS

Figs. 1A - 1F show an exemplary fishing lure according to embodiments of the present disclosure, a guide means being positioned depending on a desired depth of operation;
Fig. 2 shows a cross-section of a portion of an exemplary fishing lure according to embodiments of the present disclosure, wherein a locking means is engaged;
Fig. 3 shows the fishing lure of Fig. 2 with a disengaged locking means; and
Fig. 4 shows a cross-section of an exemplary pin for engaging a positioning plate.

### DESCRIPTION OF THE EMBODIMENTS

Reference will now be made in detail to the present exemplary embodiments of the disclosure, examples of which are illustrated in the accompanying drawings. Wherever possible, the same reference numbers will be used throughout the drawings to refer to the same or like parts.

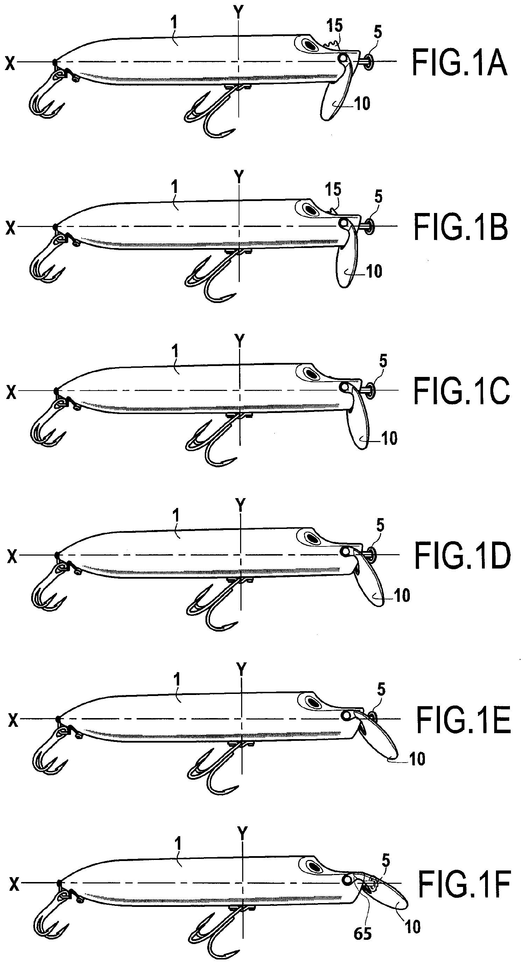

Figs. 1 A-1 F show an exemplary fishing lure according to embodiments of the present invention. The lure may include a body 1, an actuator 5, a guide plate 10, and a positioning plate 15, among others.

Body 1 may be fabricated from any suitable material for fishing lures, for example, wood, plastic, metal, and combinations thereof. For example, body 1 may comprise a thermoplastic material and may be formed via an injection molding process, the mold defining a shape of the lure, and various cavities, holes, and slots within body 1, thereby facilitating mounting of various pieces such as positioning plate 15, guide pin 25, resilient member 40, etc.

For example, according to some embodiments, a hollow cavity 42 or recess may be formed within body 1 and configured to receive a coil spring corresponding to one example of resilient member 40, which will be discussed in greater detail below.

In addition, a slot 50 may be formed in body 1, thereby enabling insertion of positioning plate 15 at a portion of body 1. Slot 50 may extend substantially vertically. The term "vertical," as used herein, is intended to indicate verticality with reference to a desired orientation of the fishing lure while in operation in water. In other words, when the fishing lure is operated as intended in the water, "vertical" corresponds to the y-axis, i.e., up/down direction as shown in Figs. 1A-F.

Further, a hole corresponding to guide pin 25, may extend through body 1 transversely to a longitudinal axis X thereof.

Body 1 may have any suitable shape for attracting fish, for example, similar to underwater fauna forming part of the food chain for a fish desiring to be caught. Body 1 may further include one or more fish hooks placed at desirable locations along body 1, as is known in the art.

Actuator 5 may be provided within slot 50 and may extend beyond an envelope surface of body 1, presenting a distal portion 30 enabling application of a force F (e.g., a pressing force) to actuator 5 by a user.

Actuator 5 may comprise any suitable material, for example, metal, plastic, wood, and combinations thereof. For example, actuator 5 may comprise a stainless steel or other material that resists corrosion when in contact with salt and/or fresh water.

Actuator 5 may be shaped as a relatively thin strip to enable installation through slot 50 along with positioning plate 15, and sliding of actuator 5 parallel to a longitudinal axis X of body 1.

Actuator 5 may be formed so as to present a comfortable interface to a user at distal end 30, for example, a flat "button-like" surface.

Actuator 5 may comprise a through slot 75, configured to receive guide pin 25, and thereby limiting a range of sliding motion available for actuator 5. A length of through slot 75 may be selected so as to enable a desired level of disengagement of pawl 35 from positioning plate 15, as will be described in greater detail below.

Each of Figs. 1A-1F depict the exemplary lure with a guide plate 10 adjusted to, and fixed in a different angular position relative to body 1. Each angular position corresponds to a desired depth at which the lure should be operated during reeling, in order, from shallowest to deepest. In other words, prior to using the lure, a user may adjust (i.e., set) the guide plate 10 to a desired position based on a depth at which the user desires the lure to "swim" during reeling.

Guide plate 10 may comprise a relatively thin (e.g., between 1 and 5 mm) plate of any suitable material, for example metal, plastic, wood, etc. According to some embodiments, guide plate 10 comprises a stainless steel and has a thickness of 3mm. Notably, guide plate 10 may be flat, cupped, or otherwise suitably shaped to provide a desired hydrofoil effect when moving through the water (e.g., during reeling).

Guide plate 10 may be engaged with a portion of positioning plate 15, and according to some embodiments, may be removably affixed thereto. For example, guide plate 10 may be inserted into a slot 60 of positioning plate 15, such that control over rotation of guide plate 10 (i.e., adjustment thereof) is maintained by positioning plate 15.

Guide plate 10 may comprise one or more hinge portions 65 configured to enable a rotation of guide plate 10, e.g., corresponding to motion of positioning plate 15. Hinge portions 65 may comprise arms extending from a portion of guide plate 10 and comprising a hole configured to receive a guide pin 25 about which guide plate 10 may rotate. As noted above, guide pin 65 may be inserted through another hole extending transversely to a longitudinal axis X through a portion of body 1, and which may further pass through a rotational center of positioning plate 15.

Positioning plate 15 may be configured to control and maintain an adjusted angular position of guide plate 10 relative to body 1, and may include two or more teeth, in between which a pawl 35 may engage positioning plate 15 to prevent rotation of positioning plate 15. Positioning plate 15 may be formed of any suitable material, for example, plastic, metal, and combinations thereof.

According to some embodiments positioning plate 15 may comprise stainless steel, zinc, or other suitably corrosion resistant material, and may be stamped, machined, or otherwise cut to a desired shape and size.

Positioning plate 15 may be inserted into slot 50 present in body 1 to permit rotation therein, and thereby, adjustment of an angle of guide plate 10 relative to body 1.

Positioning plate 15 may comprise three, four, five, or six teeth 3, depending on a desired position indexing scheme for guide plate 10. Teeth 3 may be located on an edge of positioning plate 15 offset from the side to which guide plate 10 is engaged, and may be positioned at a desired radius from a rotational center of positioning plate 15 through which guide pin 25 may pass.

Teeth 3 of positioning plate 15 may comprise, for example, spur gear type teeth (i.e., straight cut) which form therebetween a gap 4 into which a locking mechanism (e.g., a pawl or pin 35) may be engaged.

The locking mechanism may comprise a resilient member 40 and a pin 35, referred to interchangeably as a pawl 35 herein, among others.

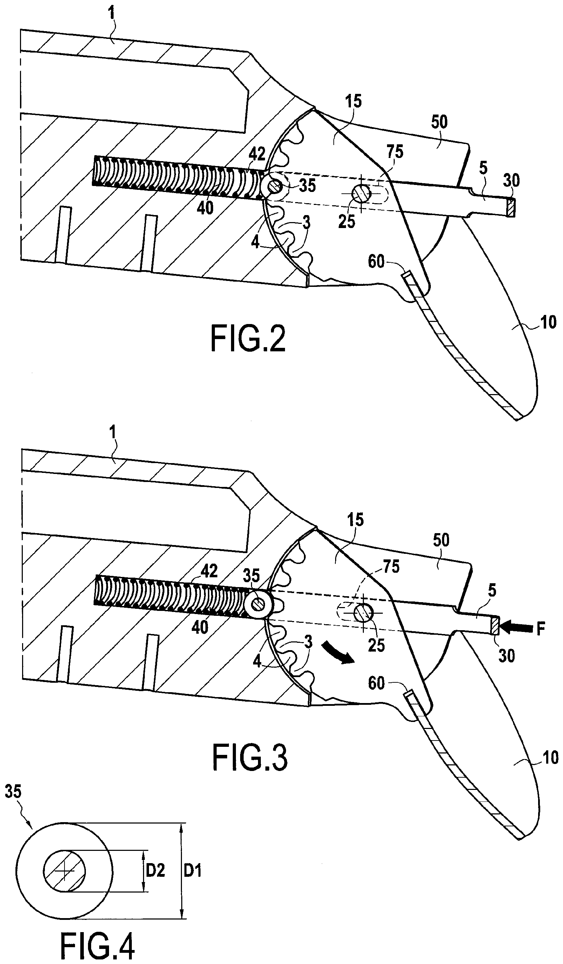

Fig. 4 shows a cross-section of an exemplary pin 35. Pin 35 is desirably fabricated from a material resistant to corrosion, such as a plastic or a stainless steel.

Pin 35 may be of any suitable shape and size for engaging within a gap 4 between teeth 3 on positioning plate 15. According to some embodiments, pin 35 may comprise two concentric cylinders, a first having a first diameter D₁, and a second having a second diameter D₂, smaller than the first diameter D₁. In such embodiments, a portion of the second cylinder may be configured to engage with positioning plate 15, while the first cylinder may be configured to engage with actuator 5, as will be described in greater detail below.

As shown at Fig. 3, the first diameter D₁ may equal to or slightly less than a diameter of hollow cavity 42, such that pin 35 may be enabled to travel inside hollow cavity 42, for example, upon application of a force to a distal portion 30 of actuator 5.

Variations of pin 35 are possible, for example, a first cylinder having a first diameter D₁ may also comprise a recess around a circumference of the first cylinder, enabling insertion of a complimentary shaped portion of actuator 5.

In another variation, pin 35 may be affixed to, or formed unitarily with actuator 5, for example, during a molding or stamping process. In such embodiments, pin 35 may comprise only one cylinder having a single diameter, and extending, for example, perpendicularly to a surface of actuator 5.

Pin 35 may be positioned at an opening of hollow cavity 42 adjacent to teeth 3 (and gaps 4) of positioning plate 15. For example, where pin 35 comprises two or more concentric cylinders, the concentric axis may be oriented horizontally, with the cylinder of first diameter D₁ in contact and biased by resilient member 40, and the cylinder of second diameter D₂ engaged in between two teeth 3 (i.e., in a gap 4) of positioning plate 15, as shown at Fig. 2.

Resilient member 40 may be housed within hollow cavity 42 within body 1, for example, such that resilient member 40 may meet pin 35 at an opening of hollow cavity 42 opposite teeth 3 of positioning plate 15.

Resilient member 40 may comprise, for example, a coil spring, and may provide a force, e.g., when compressed, sufficient for biasing pin 35 to maintain engagement within a gap 4 of positioning plate 15. In such embodiments, coil spring 40 may comprise any suitable material, and is desirably fabricated of corrosion resistant material such as a stainless steel and/or plastic.

One of skill in the art will understand that other resilient members may be used. For example, hollow cavity 42 may be filled with a resilient foam configured to produce a biasing force at an opening of hollow cavity 42.

Resilient member 40 may contact pin 35 and/or actuator 5 to provide a biasing force of both elements toward positioning plate 15. Thus, when no force is applied to actuator 5, pin 35 may be biased to engage a gap 4 of positioning plate 15, thereby preventing rotation of the positioning plate and guide plate 10.

However, when a user desires to make an adjustment to guide plate 10, for example, to change a an angular position of guide plate 10 so as to adjust a depth at which the fishing lure should operate, the user may apply a force F to actuator 5, which thereby slides along an axis parallel to longitudinal axis of body 1. This force is thereby transferred to pin 35, compressing resilient member 40 resulting in disengagement of pin 35 from positioning plate 15.

A portion of pin 35 and possibly actuator 5 may travel some distance inside hollow cavity 42 during application of force F.

Once pin 35 has been disengaged from a gap 4, positioning plate 15 is free to rotate to a newly adjusted angular position. At such point, the force F may be released, and pin 35 may reengage positioning plate 15, such that even if the fishing lure has a rough landing or collides with an object in the water, guide plate 10 remains fixed in the desired position.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

It is intended that the specification and examples be considered as exemplary only, with a true scope of the disclosure being indicated by the following claims.

## Claims

1. A fishing lure, comprising:
a body (1);
positioning means (15) operatively mounted to a first portion of the body (1);
locking means (35) configured to engage a portion of positioning means (15) to prevent rotation of the positioning means (15);
guide means (10) engaged with a portion of the positioning means (15) and extending beyond the first portion of the body (1), so as to enable angular movement of the guide means (10) relative to the body (1); and
resiliently biased actuating means (5) configured to transmit a force to the locking means (35) to cause temporary disengagement of the locking means (35) from the positioning means (15), wherein
the positioning means (15) is permitted to rotate about an axis transverse to a longitudinal axis (X) of the body (1) when the locking means (35) is disengaged.

2. The fishing lure according to claim 1, wherein the locking means (35) comprises a resiliently biased pin, preferably cylindrical in shape, configured to engage one or more teeth (3) of the positioning means (15).

3. The fishing lure according to claim 2, comprising a resilient member (40) biasing the pin (35) and optionally the actuating means (5).

4. The fishing lure according to any of claims 1-3, wherein the actuating means (5) is configured to slide parallel to a longitudinal axis (X) of the body (1).

5. The fishing lure according to any of claims 1-4, comprising a guide pin (25) about which the positioning means (15) is configured to rotate.

6. The fishing lure according to claim 5, wherein the actuating means (5) comprises a slot (75) configured to engage with the guide pin (25).

7. The fishing lure according to any of claims 5 or 6, wherein the guide pin (25) passes through at least a portion of the body (1), the positioning means (15), and the actuating means (5).

8. The fishing lure according to any of claims 1-7, wherein the positioning means (15) comprises at least 3 teeth, better at least 4 teeth, preferably 5 teeth.

9. The fishing lure according to any of claims 1-8, wherein the locking means (35) is affixed to, or formed unitarily with the actuating means (5).

10. The fishing lure according to any of claims 1-9, wherein the body (1) comprises a recess (42) configured to house a resilient member (40), and to receive at least a portion of the actuating means (5).
